# EUROPEAN PATENT SPECIFICATION

(11) **EP 1 097 642 B1**
(45) Date of publication and mention of the grant of the patent: **17.11.2004**
(21) Application number: 00203771.1
(22) Date of filing: 30.10.2000
(51) Int. Cl.: A22C 7/00

(54) **Automatic hamburger forming machine**
Maschine zur automatischen Herstellung von Hamburgern
Machine pour la confection automatique de hamburger

(30) Priority: 04.11.1999 IT MI000665 U
(43) Date of publication of application: 09.05.2001
(73) Proprietor: OEM - Ali S.p.A, 20123 Milan (IT)
(72) Inventor: Berti, Luciano, 20060 Bussero(MI) (IT)
(74) Representative: De Gregori, Antonella

(56) References cited:
- EP-A- 0 588 774

## Description

The present invention relates to an automatic hamburger forming machine.

As known, hamburger forming machines consist of a machine body which comprises a shaping roller, under which an evacuant tape is provided, for the hamburgers which are formed onto the shaping roller.

Above the machine body, a containment or mixing tank is provided, in which the meat is mixed, then conveyed by a mixing blade toward the shaping roller.

In the current forming machines, the meat mixing tanks are generally equipped with an alluminum bottom, lay above the machine body and are fixed to it through a stiff ring or other similar system which fixes their bottom to the machine body.

However, such known solution exhibits a first problem in that, with such known systems, it is not easy to carry out the cleaning of the meat mixing tank, with the consequence of a possible formation of meat residues and any way of a poor product hygiene.

A second problem, linked to the former one, consists in that, in known forming machines, it is necessary to carry out complicated dismantling operations, every time is it desired to provide for a complete cleaning of the meat mixing tank.

Another example of an automatic hamburger forming machine is disclosed in EP-A-0588774, comprising a minced meat feed hopper with a tubular body whose lower end is joined by a movable bayonet connection to a cooled base plate.

Object of the present invention is, therefore, that of realising an automatic hamburger forming machine which offers the possibility of an easy maintenance and cleaning on its own, thus contributing to the correct hygiene of the foodstuff.

These and further objects are achieved by an automatic hamburger forming machine according to claim 1, to which for sake of brevity, reference is made.

Other features of the present invention are further defined in the following claims.

Advantageously, the possibility of easily removing the meat mixing tank allows an easy and complete cleaning of the same, preventing the possible deposit of bacteria.

The system of the invention allows, further on, to provide a meat mixing tank in a single piece construction made of stainless steel, what facilitates its cleaning, thus allowing any possible bacterial residue to be eliminated.

Further objects and advantages of the present invention will appear clearly from the following description and by the attached drawings, provided purely as explicative and not limiting example, in which:

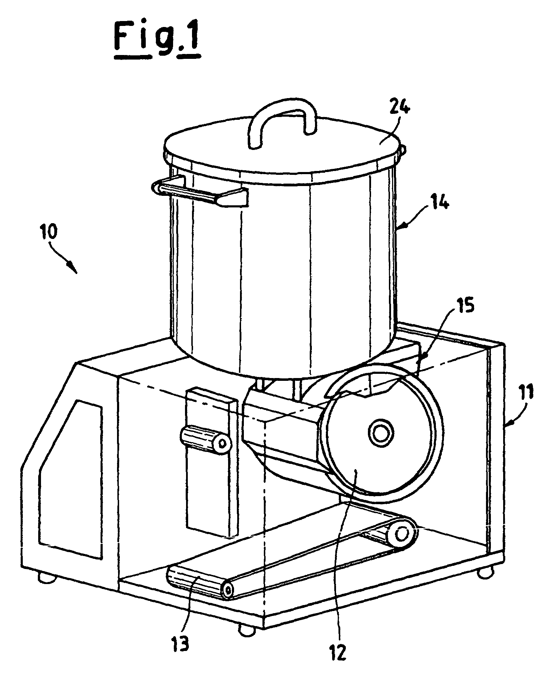

- Figure 1 represents a schematic axonometric view of an automatic hamburger forming machine, according to the invention;

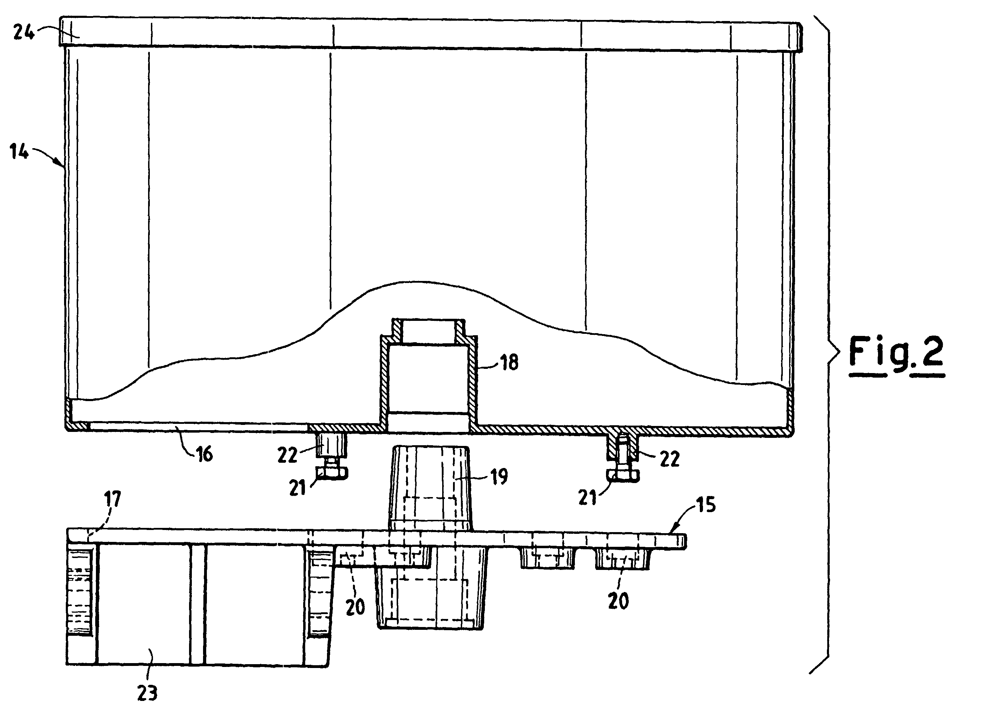

- Figure 2 represents an exploded, partially sectioned view of a meat mixing tank, belonging to the machine of the invention and of a relative engaging flange;

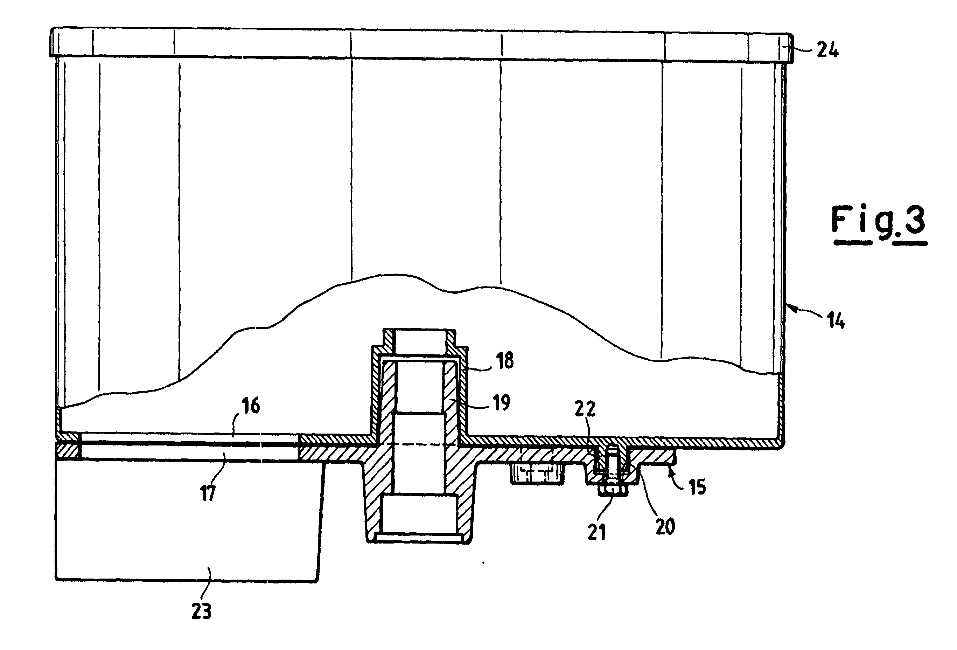

- Figure 3 represents a partially sectioned view of the components of figure 2, in mutual engagement;

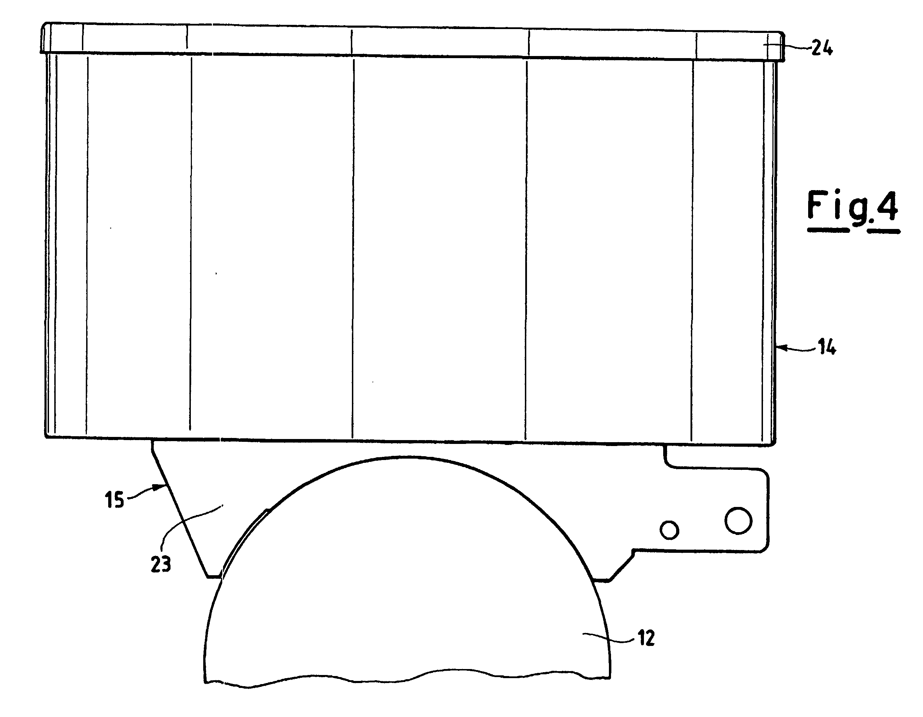

- Figure 4 represents a side view of the engagement system of the meat mixing tank, part of the machine of the invention; and

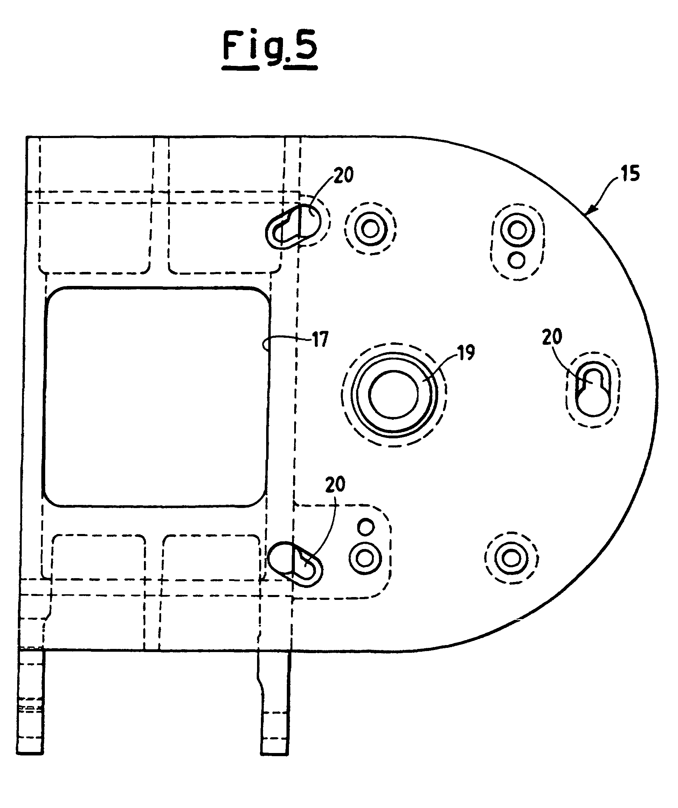

- Figure 5 represents a view from above of the flange of the preceding figures.

With particular reference to the mentioned figures, the automatic hamburger forming machine according to the invention is indicated in its whole with reference numeral 10.

The machine 10 is of the type consisting of a machine body 11, that includes or houses a shaping roller 12, under which an evacuant tape 13 for the hamburgers is provided.

Above the machine body 11, a meat mixing tank 14 is foreseen, which engages with a flange 15, which, in turn, leans on the machine body 11.

The meat mixing tank 14 is embodied in a single body and has a mixing blade (not shown for sake of simplicity), which leads the meat into the square hole 16 and, through it, towards the shaping roller 12; the meat mixing tank 14 can, moreover, be equipped with a lid 24.

The flange 15 has, in correspondence of the square hole 16, a corresponding square hole 17 for permitting the passage of the meat.

Further on, the meat mixing tank 14 has a perforated central body 18 that engages with a corresponding perforated insert 19, provided on the flange 15, and in which displacement means of the mixing blade is provided in a through passing way.

The flange 15 exhibits, moreover, three bayonet couplings 20, offset by 120° with respect to each other, inside which heads of respective screws 21 engage, inserted in threaded dead holes, belonging to projecting elements 22 and formed into the bottom of the meat mixing tank 14.

The flange 15 has also arched attachments 23 that, since it is placed onto the machine body 11, allow its engagement with the shaping roller 12.

The meat mixing tank 14 is made of 18/10 stainless steel, what, as already stressed, facilitates its cleaning, allowing, in particular, the removal of any bacterial residue.

More in detail, the system described allows easily installing the meat mixing tank 14 onto the machine body 11 of the forming machine 10.

Such installation is carried out by engaging the screw heads 21, previously inserted in the threaded dead holes, belonging to the projecting elements 22, of the bottom of the meat mixing tank 14, inside the bayonet couplings 20 of the flange 15 and then by slightly rotating the tank 14 for fixing it in position.

The dismantling operations of the tank 14 are as easy as those for the installation; it is enough to slightly rotate the same until the heads of the screws 21 may be disengaged from the bayonet couplings 20 and the meat mixing tank 14 may be then removed, for example in order to carry out a complete cleaning thereof.

From the description above, the features as well as the advantages of the automatic hamburger forming machine according to the present invention arise clearly.

In particular, the present invention allows the forming machine to be absolutely in compliance with the sanitary rules in force.

Finally, it is clear that numerous variations may be carried out onto the automatic hamburger forming machine, object of the present invention, without departing from the principles of novelty of the present inventive idea.

In the practical embodying of the invention, the materials, the shapes and dimensions of the details illustrated may be whatever according to the specific requirements and it will be possible to replace them with any technical equivalent.

## Claims

1. Automatic hamburger forming machine (10) of the type consisting of a machine body (11) that houses a shaping roller (12), under which an evacuant tape (13) for the hamburgers is provided and in which, above said machine body (11), a meat mixing tank (14) is provided, **characterised in that** said meat mixing tank (14) is realised in a single piece and comprises a bottom wall and a tubular outer wall, between said bottom wall of the meat mixing tank (14) and said machine body (11), means for the quick engagement and disengagement of said meat mixing tank (14) with respect to said machine body (11) is provided.

2. Machine (10) according to claim 1, **characterised in that** the means for the quick engagement and disengagement of said meat mixing tank (14) with respect to said machine body (11) comprises a flange (15) bound to said machine body (11), wherein said flange (15) has a hole (17) for the passage of meat.

3. Machine (10) according to claim 2, **characterised in that** said meat mixing tank (14) has a perforated central body (18) that engages with a respective perforated insert (19) provided on said flange (15), and in which displacement means of at least one mixing blade is provided in a through passing way.

4. Machine (10) according to claim 2, **characterised in that** said flange (15) exhibits three bayonet couplings (20), offset by 120° with respect to each other, inside which heads of respective screws (21) engage, inserted in threaded dead holes, belonging to projecting elements (22) and formed into the bottom of the meat mixing tank (14).

5. Machine (10) according to claim 2, **characterised in that** said flange (15) has arched attachments (23), which permit the engagement with said shaping roller (12).

6. Machine (10) according to claim 1, **characterised in that** said meat mixing tank (14) is realised in stainless steel.

## Patentansprüche

1. Automatische einen Hamburger ausbildende Maschine (10) des Typs, welcher aus einem Maschinenkörper (11) besteht, der eine Formrolle (12) aufnimmt, unter der ein Abführband (13) für die Hamburger vorhanden ist und in welcher, über dem Maschinenkörper (11), ein Fleischmischtank (14) vorhanden ist,
**dadurch gekennzeichnet,**
**dass** der Fleischmischtank (14) aus einem einzelnen Stück realisiert ist und eine Bodenwand und eine röhrenförmige Außenwand, zwischen der Bodenwand des Fleischmischtanks (14) und dem Maschinenkörper (11), umfasst, wobei ein Mittel zum schnellen Eingriff und Lösen des Fleischmischtanks (14) bezüglich des Maschinenkörpers (11) vorhanden ist.

2. Maschine (10) nach Anspruch 1, **dadurch gekennzeichnet, dass** das Mittel zum schnellen Eingriff und Lösen des Fleischmischtanks (14) bezüglich des Maschinenkörpers (11) einen mit dem Maschinenkörper (11) verbundenen Flansch (15) umfasst, wobei der Flansch (15) ein Loch (17) für die Durchführung von Fleisch aufweist.

3. Maschine (10) nach Anspruch 2, **dadurch gekennzeichnet, dass** der Fleischmischtank (14) einen perforierten Mittelkörper (18) aufweist, welcher sich mit einem entsprechend perforierten Einsatz (19), der auf dem Flansch (15) vorhanden ist, in Eingriff befindet, und wobei ein Verschiebungsmittel mindestens einer Mischschaufel in einem Durchgangsweg vorhanden ist.

4. Maschine (10) nach Anspruch 2, **dadurch gekennzeichnet, dass** der Flansch (15) drei Bajonettkopplungen (20), welche um 120° voneinander versetzt sind, aufweist, innerhalb welchen sich Köpfe von entsprechenden Schrauben (21) in Eingriff befinden, welche in tote Gewindelöcher eingeführt sind, die zu hervorragenden Elementen (22) gehören und in dem Boden des Fleischmischtanks (14) ausgebildet sind.

5. Maschine (10) nach Anspruch 2, **dadurch gekennzeichnet, dass** der Flansch (15) gebogene Aufsätze (23) aufweist, welche den Eingriff mit der Formrolle (12) erlauben.

6. Maschine (10) nach Anspruch 1, **dadurch gekennzeichnet, dass** der Fleischmischtank (14) aus rostfreiem Stahl realisiert ist.

## Revendications

1. Machine de formation de hamburger automatique (10) du type consistant en un corps de machine (11) qui loge un galet de formage (12), sous lequel une bande d'évacuation (13) pour les hamburgers est prévue et dans lequel, au-dessus dudit corps de machine (11), un réservoir de mélange de viande (14) est prévu, **caractérisée en ce que** ledit réservoir de mélange de viande (14) est réalisé en une seule pièce et comprend une paroi de fond et une paroi externe tubulaire, et **en ce que**, entre ladite paroi de fond du réservoir de mélange de viande (14) et ledit corps de machine (11), des moyens pour la mise en prise et le débrayage rapides dudit réservoir de mélange de viande (14) par rapport audit corps de machine (11) sont prévus.

2. Machine (10) selon la revendication 1, **caractérisée en ce que** les moyens pour la mise en prise et le débrayage rapides dudit réservoir de mélange de viande (14) par rapport audit corps de machine (11) comprennent un plateau d'accouplement (15) lié audit corps de machine (11), dans laquelle ledit plateau (15) présente un trou (17) pour le passage de la viande.

3. Machine (10) selon la revendication 2, **caractérisée en ce que** ledit réservoir de mélange de viande (14) présente un corps central perforé (18) qui se met en prise avec un insert perforé respectif (19) prévu sur ledit plateau (15), et dans laquelle des moyens de déplacement d'au moins une lame de mélange sont prévus d'une manière débouchante.

4. Machine (10) selon la revendication 2, **caractérisée en ce que** ledit plateau (15) affiche trois accouplements à baïonnette (20) décalés de 120° les uns par rapport aux autres, à l'intérieur desquels des têtes de vis respectives (21) se mettent en prise, insérées dans des culots filetés appartenant aux éléments en saillie (22) et formées dans le fond du réservoir de mélange de viande (14).

5. Machine (10) selon la revendication 2, **caractérisée en ce que** ledit plateau (15) présente des attaches arquées (23), qui permettent la mise en prise avec ledit galet de formage (12).

6. Machine (10) selon la revendication 1, **caractérisée en ce que** ledit réservoir de mélange de viande (14) est réalisé en acier inoxydable.
